(19) Europäisches Patentamt
European Patent Office
Office européen des brevets

(11) **EP 3 467 442 A1**

(12) **EUROPÄISCHE PATENTANMELDUNG**

(43) Veröffentlichungstag:
**10.04.2019 Patentblatt 2019/15**

(21) Anmeldenummer: **18201733.5**

(22) Anmeldetag: **08.03.2018**

(51) Int Cl.:
*G01D 5/14* (2006.01)   *H02K 41/03* (2006.01)
*H02P 25/06* (2016.01)   *H02K 11/215* (2016.01)
*H02P 6/16* (2016.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **13.03.2017   AT 501982017**

(62) Dokumentnummer(n) der früheren Anmeldung(en) nach Art. 76 EPÜ:
**18160782.1 / 3 376 166**

(71) Anmelder: **B&R Industrial Automation GmbH**
**5142 Eggelsberg (AT)**

(72) Erfinder:
• **Weber, Andreas**
  **5020 Salzburg (AT)**
• **Plainer, Manuel**
  **4890 Weißenkirchen i.A. (AT)**

(74) Vertreter: **Patentanwälte Pinter & Weiss OG**
**Prinz-Eugen-Straße 70**
**1040 Wien (AT)**

Bemerkungen:
Diese Anmeldung ist am 22-10-2018 als Teilanmeldung zu der unter INID-Code 62 erwähnten Anmeldung eingereicht worden.

(54) **LINEARMOTOR**

(57)   Die Erfindung betrifft einen Linearmotor mit einem Stator (2) und einem Läufer (3), der entlang des Stators (2) bewegbar ist, wobei am Läufer (3) eine Anordnung von Antriebsmagnete (4) in Form einer Mehrzahl von in Bewegungsrichtung (x) des Läufers (3) nebeneinander angeordneten Antriebsmagneten (4) mit einer Polteilung ($\tau_p$) vorgesehen ist und im Linearmotor (1) in Bewegungsrichtung (x) des Läufers (3) eine Mehrzahl von Positionssensoren (Sn-1, Sn, Sn+1) ortsfest und mit einem Sensorabstand ($I_S$) beabstandet voneinander angeordnet sind, wobei der Positionssensor (Sn-1, Sn, Sn+1) ein Magnetfeld eines Antriebsmagneten (4) der Anordnung der Antriebsmagnete (4) im Bereich des Positionssensors (Sn-1, Sn, Sn+1) erfasst, wobei der Sensorabstand ($I_S$) größer als die Polteilung ($\tau_p$) ist.

Fig. 1

**Beschreibung**

Die gegenständliche Erfindung betrifft einen Linearmotor mit einem Stator und einem Läufer, der entlang des Stators bewegbar ist, wobei am Läufer eine Anordnung von Antriebsmagnete in Form einer Mehrzahl von in Bewegungsrichtung des Läufers nebeneinander angeordneten Antriebsmagneten mit einer Polteilung vorgesehen ist und im Linearmotor in Bewegungsrichtung des Läufers eine Mehrzahl von Positionssensoren ortsfest und mit einem Sensorabstand beabstandet voneinander angeordnet sind, wobei der Positionssensor ein Magnetfeld eines Antriebsmagneten der Anordnung der Antriebsmagnete im Bereich des Positionssensors erfasst.

Linearmotoren zeichnen sich dadurch aus, dass ein beweglicher Teil (der Läufer) gegenüber einem festen Teil (dem Stator) aufgrund wechselwirkender Magnetfelder bewegt wird. Dazu ist auf einem der beiden Teile ein Antriebsmagnet (Elektromagnet oder Permanentmagnet) angeordnet, der zur Erzeugung einer linearen Vortriebskraft mit dem Magnetfeld, das von einer bestromten Antriebsspule am anderen Teil erzeugt wird, zusammenwirkt. Wird an die Antriebsspule eine Spannung angelegt, entsteht ein magnetisches Feld, das mit dem Magnetfeld des Antriebsmagneten zusammenwirkt, wodurch eine Kraft auf den beweglichen Teil erzeugt wird, die den beweglichen Teil bewegt. Zur Bewegung des Läufers wird durch entsprechende Ansteuerung der Antriebsspulen ein bewegtes Magnetfeld erzeugt. Dieses motorische Grundprinzip ist natürlich hinreichend bekannt, weshalb hier nicht näher darauf eingegangen werden muss. Dabei ist es grundsätzlich auch unerheblich, ob die Antriebsspulen auf dem bewegten Teil (Läufer) oder dem feststehenden Teil (Stator) vorgesehen sind.

Zur Regelung der Bewegung des Läufers eines Linearmotors ist es unbedingt erforderlich dessen aktuelle Position, relativ zum Stator zu kennen, um die Antriebsspulen zur Erzeugung des bewegten Magnetfeldes richtig bestromen zu können. Der Positionsbestimmung des Läufers kommt daher eine besondere Rolle zu. Hierbei ist es insbesondere schwierig, die aktuelle Position des Läufers beim Einschalten des Linearmotors zu bestimmen, weil man vorab nicht wissen kann, wo sich der Läufer zum Zeitpunkt des Einschaltens befindet. Zur Positionsbestimmung beim Einschalten des Linearmotors sind schon verschiedene Methoden vorgeschlagen worden.

Die US 7,932,684 B2 beschreibt beispielsweise einen Linearmotor, der zur Positionsbestimmung zusätzlich am Läufer angeordnete Positionsmagnete und ortsfeste Positionssensoren (z.B. am Stator angeordnet) umfasst. Wird der Läufer bewegt, bewegen sich die Positionsmagnete relativ zu den Positionssensoren und die aktuelle Position des Läufers relativ zum Stator kann bestimmt werden. Die Positionsmagnete umfassen eine erste Reihe einer Anzahl von nebeneinander angeordneten Permanentmagneten, die mit einem Inkrementalsensor zusammenwirken und eine zweite Reihe einer Anzahl von nebeneinander angeordneten Permanentmagneten, die mit einem Absolutsensor zusammenwirken. Der Absolutsensor, z.B. ein Hall-Sensor, ist so ausgeführt, dass dieser nur zwei Zustände liefert, wobei der Zustand an einer definierten Position des Läufers wechselt. Der Inkrementalsensor, z.B. ein magnetoresistiver Sensor, ist so ausgeführt, dass dieser viele wiederkehrende Sensorzyklen liefert, wobei innerhalb eines Sensorzyklus die Position sehr genau bestimmt werden kann. Beim Einschalten muss zuerst ein "Homing", also eine Referenzierung einer vorgegebenen, bekannten Nullposition, durchgeführt werden. Dazu wird der Läufer bewegt, bis der Absolutsensor einen Zustandswechsel erfasst, womit die Nullposition bestimmt ist. Ausgehend von der Nullposition kann dann die aktuelle Position des Läufers inkrementell ermittelt werden, in dem die Anzahl der Sensorzyklen gezählt wird und innerhalb der Sensorzyklen eine feine Bestimmung der Position erfolgt. Zur Bestimmung der Position des Läufers beim Einschalten ist daher in der US 7,932,684 B2 eine Referenzfahrt notwendig. Diese Art der Positionserfassung ist aber nur bei relativ eingeschränkten Bewegungsbereichen des Läufers sinnvoll zu realisieren. Für viele Anwendungen, insbesondere für Linearmotoren mit großem Bewegungsspielraum oder für Langstatorlinearmotoren mit einer Vielzahl von Läufern, ist diese Art der Positionsbestimmung natürlich absolut ungeeignet.

Die Bestimmung einer Absolutposition, auch beim Einschalten des Linearmotors, kann der US 7,994,742 B2 entnommen werden. Dabei ist über den möglichen Bewegungsspielraum ein länglicher Positionsmagnet am Läufer angeordnet, wobei der Positionsmagnet so angeordnet ist, dass sich ein positionsabhängiges Offset in Querrichtung ergibt. An einer ortsfesten Konstruktion, z.B. dem Stator, ist ein Positionssensor angeordnet, der das Magnetfeld des Positionsmagneten erfasst. Aufgrund des Offsets ergibt sich an jeder Position des Läufers ein eindeutiges Magnetfeld, das vom Positionssensor erfasst wird. Damit kann auch beim Einschalten des Linearmotors sofort und ohne Bewegung des Läufers auf die aktuelle Position des Läufers geschlossen werden. Der Bewegungsspielraum ist dabei aber natürlich auf die Länge des Positionsmagneten beschränkt und damit sehr limitiert. Für viele Anwendungen, insbesondere für Linearmotoren mit großem Bewegungsspielraum oder für Langstatorlinearmotoren mit einer Vielzahl von Läufern, ist diese Art der Positionsbestimmung natürlich absolut ungeeignet.

Die US 6,876,107 B2 beschreibt als Linearmotor einen bekannten Langstatorlinearmotor. Ein solcher Langstatorlinearmotor umfasst eine Vielzahl von Antriebsspulen, die ortsfest, nebeneinander angeordnet sind und den Stator des Langstatorlinearmotors ausbilden. Entlang des Stators kann eine Vielzahl von Läufern angeordnet sein, die entlang des Stators bewegt werden können. Jeder Läufer trägt einen Antriebsmagneten. Zur Bewegung des Läufers werden jeweils die Antriebsspulen bestromt, die gerade mit einem Läufer zusammenwirken. Auf diese Weise können einzelne Läufer unabhängig voneinander entlang des Stators bewegt werden. Solche Langstatorlinearmotoren werden häufig in flexiblen Transportsystemen eingesetzt, beispielsweise in einem Produktionsprozess oder in der Fördertechnik. Die US 6,876,107 B2 beschreibt ferner die Bestimmung einer echten Absolutposition ("true absolute position"), die es ermöglicht, sofort beim Einschalten des Langstatorlinearmotors die genaue Position eines Läufers zu bestimmen, ohne hierfür eine Referenzierung (beispielsweise durch eine Referenzfahrt des Läufers) durchführen zu müssen. Das ist natürlich sehr vorteilhaft, ganz besonders wenn man bedenkt, dass in einem Langstatorlinearmotor nicht selten einige hundert Läufer gleichzeitig vorhanden sein können. Dafür ist an einem Läufer genau ein zusätzlicher Positionsmagnet angeordnet und entlang des Stators sind eine Vielzahl von Positionssensoren, z.B. magnetoresistive Sensoren, angeordnet, die das Magnetfeld des Positionsmagnets erfassen. Die Positionssensoren müssen dabei aber so eng angeordnet sein, dass sichergestellt ist, dass zu jeden Zeitpunkt zumindest ein Positionssensor das Magnetfeld des Positionsmagneten erfassen kann. Beim Einschalten des Langstatorlinearmotors spricht damit für jeden Läufer zumindest ein Positionssensor an, womit die Positionsbestimmung auch ohne Referenzierung des Läufers möglich ist. Der Nachteil dabei ist, dass ein zusätzlicher Positionsmagnet erforderlich ist und die Positionssensoren sehr engmaschig angeordnet sein müssen, was eine hohe Anzahl solcher Positionssensoren notwendig macht.

Es ist eine Aufgabe der gegenständlichen Erfindung einen Linearmotor mit reduziertem vorrichtungsmäßigem Aufwand für die Bestimmung der Absolutposition eines Läufers des Linearmotors anzugeben.

Diese Aufgabe wird gelöst, indem der Sensorabstand größer als die Polteilung ist. Damit können die Positionssensoren relativ weit auseinander liegend angeordnet werden, auf jeden Fall weiter auseinander, als die Polteilung der Antriebsmagnete, womit Positionssensoren eingespart werden können.

Konstruktiv vorteilhaft ist es, wenn der Stator mit einem Eisenkern mit Zähnen ausgeführt ist und auf jedem zweiten Zahn des Stators eine Antriebsspule angeordnet ist, wobei dann vorzugsweise auf jedem zweiten Zahn des Stators ein Positionssensor angeordnet ist. Das ermöglicht eine sehr einfache konstruktive Ausgestaltung des Linearmotors. Dabei ist es vorteilhaft, wenn die Positionssensoren auf Zähnen des Stators ohne Antriebsspule angeordnet sind.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 einen erfindungsgemäßen Aufbau eines Linearamotors,

Fig.2 und 3 die Erfassung eines Magnetfeldes eines Antriebsmagnetes mit einem Positionssensor,
Fig.4 eine mögliche Methode zur Ermittlung eines Randbereichs der Anordnung der Antriebsmagnete am Läufer,
Fig.5 die mögliche Ermittlung der Absolutposition des Läufers,
Fig.6 eine weitere mögliche Methode zur Ermittlung eines Randbereichs der Anordnung der Antriebsmagnete am Läufer und
Fig.7 noch eine weitere mögliche Methode zur Ermittlung eines Randbereichs der Anordnung der Antriebsmagnete am Läufer.

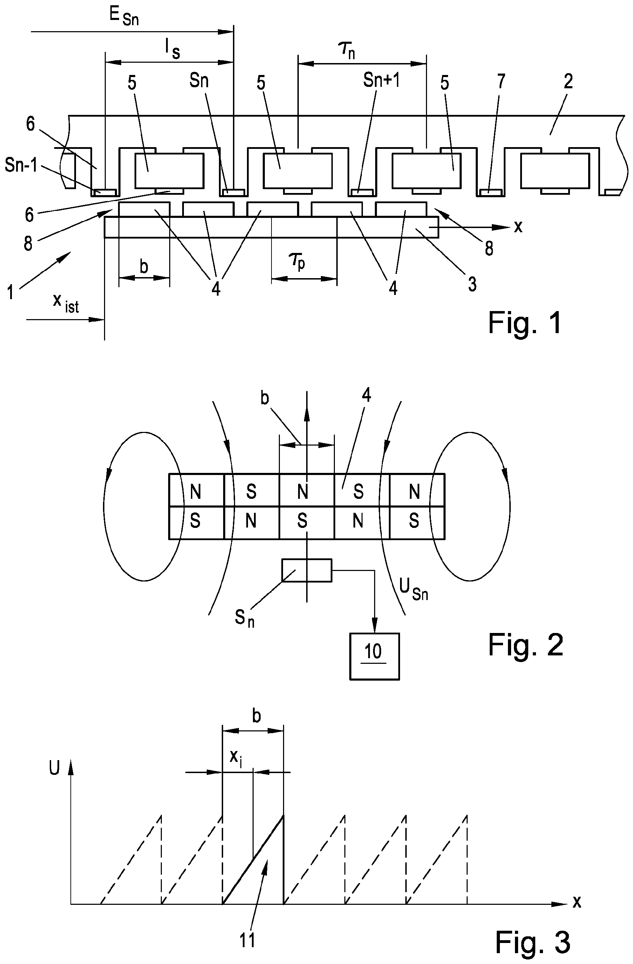

Die Erfindung wird nachfolgend ohne Einschränkung anhand eines Linearmotors 1 mit Antriebsmagneten 4 am Läufer 3 und mit ortsfesten Antriebsspulen 5 am Stator 2 beschrieben, wie in Fig.1 dargestellt. Eine solche Konfiguration findet sich in der Regel bei Langstatorlinearmotoren. Als Antriebsmagnete 4 kommen Permanentmagnete oder Elektromagnete in Frage. In der gezeigten Ausgestaltung ist der Stator 2 mit einem Eisenkern mit Zähnen 6 (in der Regel ein Blechpaket) ausgeführt und auf jedem zweiten Zahn ist eine Antriebsspule 5 angeordnet. Natürlich kann der Stator 2 auch kernlos ausgeführt sein oder es kann auch auf jedem Zahn 6 eines Kerns eine Antriebsspule 5 angeordnet sein.

Die Erfindung geht davon aus, dass am Läufer 3 des Linearmotors 1 in der Regel immer mehrere Antriebsmagnete 4 (also mehr als ein Antriebsmagnet) angeordnet sind. Um auf einen eigenen, zusätzlichen Positionsmagneten am Läufer 3 verzichten zu können, werden nun diese Antriebsmagnete 4 gleichzeitig auch für die Positionsbestimmung verwendet. Der Abstand zwischen zwei Antriebsmagnete 4 (von Polmitte zu Polmitte) wird bekanntermaßen als Polteilung $\tau_p$ bezeichnet und der Abstand zwischen zwei Antriebsspulen 5 (von Polmitte zu Polmitte) wird als Nutteilung $\tau_n$ bezeichnet. Die Erfindung geht davon aus, dass die Positionssensoren Sn (n ist ein Index, der für alle Positionssensoren steht, also S1, S2, ...) ortsfest und in einem größeren Senso-rabstand $l_S$ angeordnet sind, als die Polteilung $\tau_p$. Durch diese Anordnung kann die Anzahl der benötigten Positionssensoren reduziert werden. Im gezeigten Ausführungsbeispiel ist an jedem zweiten Zahn 6, vorzugsweise der Zahn an dem keine Antriebsspule 5 angeordnet ist, des Stators 2 ein Positionssensor Sn angeordnet, wo-durch der Sensorabstand $l_S$ der Nutteilung $\tau_n$ entspricht, was aber nicht zwingend notwendig ist.

Die Antriebsmagnete 4 können unmittelbar nebeneinander angeordnet sein, oder können auch mit einem Abstand dazwischen angeordnet sein, wie in Fig.1 dargestellt. Im ersten Fall entspricht die Breite b eines Antriebsmagneten 4 der Polteilung $\tau_p$. Nachdem sich die einzelnen Magnetfelder der Antriebsmagnete 4 überlappen, fällt das Magnetfeld im Bereich des Abstandes zwischen den Antriebsmagneten 4 nur unmerklich ab. Dazu sollte der Abstand natürlich nicht zu groß werden, wobei der zulässige bzw. vertretbare Abstand natürlich von der Stärke der Antriebsmagnete 4 abhängt.

In der in Fig.1 gezeigten Position des Läufers 3 würde der Positionssensor Sn ein bestimmtes Sensorsignal $U_{Sn}$ liefern. Als Positionssensoren werden hinlänglich bekannte Sensoren verwendet, die das Magnetfeld der Antriebsmagnete 4, oder eine Eigenschaft des Magnetfeldes, messen, beispielsweise die Magnetfeldintensität (z.B. ein Hall-Sensor) oder die Richtung des Magnetfeldes (z.B. ein Magnetoresistiver Sensor). Auch Magnetostriktive Sensoren sind möglich. Solche Sensoren erzeugen bei Bewegung eines Antriebsmagnetes 4 vor dem Sensor ein Sensorsignal $U_{Sn}$, beispielsweise eine elektrische Spannung in Form eines sin/cos-Verlaufs. Aus diesem Verlauf wird in der Regel ein Sensorsignalzyklus 11, beispielsweise eine wiederkehrende Sägezahnspannung, berechnet, innerhalb dem die Position $x_i$ des Antriebsmagnetes relativ zum Sensor bestimmt werden kann. Das ist in Fig.2 und 3 am Beispiel eines Magnetoresistiven Sensors als Positionssensor Sn dargestellt. Der Positionssensor Sn erfasst den Magnetfeldwinkel $\alpha$ des Magnetfeldes (angedeutet durch die Feldlinien in Fig.2) aus dem ein Sensorsignal $U_{Sn}$ in Form eines elektrischen $\sin(\alpha)/\cos(\alpha)$-Signals gewonnen wird. Daraus kann über die atan- oder atan2-Winkelfunktion (atan2 entspricht dem atan mit der vorzeichenrichtigen Berücksichtigung der einzelnen Argumente der Funktion) eine Sägezahnspannung als Sensorsignalzyklus 11 ermittelt werden. Jede Spannung des Sägezahns ist einer eindeutigen Position $x_i$ des Antriebsmagnets 4 relativ zum Positionssensor Sn zugeordnet. Je nach Auflösung des Sensorsignalzyklus 11 in einer Auswerteeinheit 10 kann die Position $x_i$ mehr oder weniger genau aufgelöst bestimmt werden. Nachdem die Einbauposition des Positionssensors Sn und der konstruktive und geometrische Aufbau des Läufers natürlich bekannt sind, kann damit die absolute Position des Läufers 3 bestimmt werden, sofern bekannt ist, von wessen Antriebsmagnet 4 das mit dem Positionssensor Sn gemessene Magnetfeld stammt.

Wäre in Fig.1 nun der Läufer 3 um die Polteilung $\tau_p$ in Bewegungsrichtung x verschoben, würde derselbe Positionssensor Sn dasselbe Signal liefern, allerdings von einem anderen Antriebsmagnet 4 herrührend, da sich der Sensorsignalzyklus 11 wiederholt. Damit ergibt sich eine Mehrdeutigkeit, die dazu führt, dass beim Einschalten des Linearmotors 1 keine eindeutige Position des Läufers 3 bestimmbar ist, weil nicht bekannt ist, welches Magnetfeld ein Sensor Sn erfasst.

Um dieses Problem zu beheben, können beim Einschalten des Linearmotors 1 die Wirkung der magnetischen Felder vorzugsweise aller Antriebsmagnete 4 des Läufers 3 ausgewertet werden. Damit soll insbesondere der Randbereich 8 (in Bewegungsrichtung x gesehen) der Anordnung der Antriebsmagnete 4 erfasst werden. Der Randbereich 8 wird im Bereich des in Bewegungsrichtung x gesehenen ersten und letzten Antriebsmagneten ausgebildet, da das von den Antriebsmagneten 4 erzeugte Magnetfeld bekanntermaßen abseits des Antriebsmagnetes 4 rasch und stark abfällt. Damit fällt auch das Magnetfeld am Rand der Anordnung der Antriebsmagnete 4 (also neben dem ersten und letzten Antriebsmagneten 4), also im Bereich des Randbereiches 8, ebenso rasch und stark ab, wohingegen in der Mitte der Anordnung der Antriebsmagnete 4 aufgrund der Überlappung der Magnetfelder mit keinem oder mit nur geringem Abfall zu rechnen ist. Das kann ausgenutzt werden, um den Randbereich 8 der Anordnung der Antriebsmagnete 4 zu erfassen. Kennt man die Randbereiche 8, oder zumindest einen Randbereich 8, der Anordnung der Antriebsmagnete 4, kann daraus (wieder aus der Kenntnis des konstruktiven und geometrischen Aufbaus des Läufers 3) ermittelt werden, von wessen Antriebsmagnet 4 das mit einem Positionssensor Sn gemessene Magnetfeld stammt, da die Anordnung der Antriebsmagnete 4 zwischen den beiden Randbereichen 8 liegen muss. Für die Ermittlung dieser Zuordnung kann es aber natürlich ausreichen, nur einen Randbereich 8 zu bestimmen. Es kann auch die Situation geben, dass mehrere Läufer 3 in Bewegungsrichtung x gesehen unmittelbar hintereinander angeordnet sind, womit zwischen zwei erfassten Randbereichen 8 ein Abstand auftritt, der größer als die bekannte Länge eines Läufers 3 ist. Beispielsweise reicht in diesem Fall auch die Erfassung eines Randbereichs 8 für die Grobpositionierung eines Läufers 3 und man kann aufgrund des großen Abstandes sogar auf das Vorhandensein von mehreren Läufern 3 schließen. Die Zuordnung zwischen Antriebsmagnete 4 und Positionssensoren Sn kann natürlich auch für alle Positionssensoren Sn im Bereich der Anordnung der Antriebsmagnete 4 gemacht werden. Damit kann aufgrund der bekannten geometrischen Verhältnisse jedem Positionssensor Sn im Bereich der Anordnung der Antriebsmagnete 4 der konkrete Antriebsmagnet zugewiesen werden, dessen Magnetfeld vom jeweiligen Positionssensor Sn erfasst wird. Damit fällt die oben beschriebene Mehrdeutigkeit weg. Mit dieser Kenntnis der Zuordnung von Antriebsmagnet 4 zu Positionssensor Sn, kann dann zumindest ein beliebiger Positionssensor Sn im Bereich der Anordnung der Antriebsmagnete 4 hinsichtlich der genauen Position $x_i$ ausgelesen werden.

Hierbei ist es grundsätzlich unerheblich, welcher Positionssensor Sn im Bereich der Anordnung der Antriebsmagnete 4 zwischen den Randbereichen 8 zur Positionsbestimmung verwendet wird. Für die Positionsbestimmung des Läufers 3 reicht es natürlich aus, wenn nur ein Positionssensor Sn im Bereich der Antriebsmagnete 4 verwendet wird. Das kann grundsätzlich ein beliebiger Positionssensor Sn sein. Vorzugsweise wird aber der Positionssensor Sn herangezogen, der am nächsten an der Mitte der Anordnung der Antriebsmagnete 4 liegt, da in diesem Bereich der Verlauf der Feldlinien des Magnetfeldes der Antriebsmagnete 4 günstiger verläuft, da die Feldlinien in etwa rechtwinkelig auf den Positionssensor Sn auftreffen (siehe Fig.2). Man könnte aber natürlich auch mehrere Positionssensoren Sn zur Positionsbestimmung heranziehen und die Absolutposition $x_{ist}$ des Läufers 3 beispielsweise als Mittelwert der bestimmten Positionen aller verwendeter Positionssensoren Sn heranziehen, oder die redundante Bestimmung der Absolutposition $x_{ist}$ zur Verifikation nutzen.

Diese Zuordnung von Antriebsmagnet 4 zu Positionssensor Sn kann aber nur mit einer eingeschränkten Genauigkeit erfolgen, weshalb auch von einer Grobpositionierung gesprochen wird. Aufgrund dieser Ungenauigkeit kann aber der Fall auftreten, dass nicht sicher festgestellt werden kann, von wessen Antriebsmagnet 4 das mit einem Positionssensor Sn gemessene Magnetfeld stammt. In diesem Fall kann einfach ein anderer, eindeutig zuordenbarer Positionssensor Sn zur Bestimmung der Absolutposition $x_{ist}$ herangezogen werden. Es könnte aber auch der Sensorsignalzyklus 11 des Positionssensors Sn als zusätzliche Informationsquelle für die Grobpositionierung verwendet werden. Der Fall der nicht klaren Zuordenbarkeit wird im Bereich um das Ende eines Sensorsignalzyklus 11 und dem Beginn des benachbarten Sensorsignalzyklus 11 auftreten. Je nachdem welchen Wert der Positionssensor Sn ausgibt, kann dann auf den einen oder anderen Antriebsmagnet 4 geschlossen werden.

Nachdem die Einbauposition $E_{Sn}$ des ausgewählten Positionssensors Sn ortsfest und bekannt ist, kennt man dann in weiterer Folge über die bekannte Einbauposition $E_{Sn}$ des Positionssensors Sn und es kann über die ermittelte Relativposition $x_i$ des Antriebsmagnets 4 zum Positionssensor Sn, und natürlich auch aufgrund der bekannten Geometrie des Läufers 3 (was natürlich auch die Geometrie (Polteilung $\tau_p$, Anzahl und/oder Breite der Antriebsmagnete 4, usw.) der Anordnung der Antriebsmagnete 4 umfasst), die aktuelle, genaue (innerhalb der vorgegebenen Sensorauflösung) Absolutposition $x_{ist}$ des Läufers 3 des Linearmotors 1 ermittelt werden.

Die weitere Positionsbestimmung bei Bewegung des Läufers 3 erfolgt dann beispielsweise inkrementell. Der Positionssensor Sn wird hierfür mit dem Index N des aktuell damit gemessenen Antriebsmagneten 4 als Startinkrement SI initialisiert. Dann kann der ausgewählte Positionssensor Sn beispielsweise solange zur Positionserfassung verwendet werden, solange sich dieser im Bereich der Antriebsmagnete 4 befindet. Dabei werden die Sensorsignalzyklen 11 als Inkrement I gezählt und innerhalb eines Sensorsignalzyklus 11 die genaue Position $x_i$ des gemessenen Antriebsmagnetes 4 bestimmt. Danach wird auf den in Bewegungsrichtung x gesehen nächsten Positionssensor Sn+1 umgeschaltet und der Positionssensor Sn+1 mit dem Index N des aktuell damit gemessenen Antriebsmagneten 4 als Startinkrement SI initialisiert. Dann wird wieder inkrementell die Absolutposition $x_{ist}$ bestimmt. Die Anzahl der mit dem Positionssensor Sn gemessenen Sensorsignalzyklen 11, also die Anzahl der mit dem neuen Positionssensor Sn+1 gemessenen Antriebsmagnete 4, wird dabei natürlich bis zum nächsten Weiterschalten auf den Positionssensor Sn+2 als Inkrement I mitgezählt und zur inkrementellen Bestimmung der Absolutposition $x_{ist}$ verwendet. Die Weiterschaltung auf den nächsten Positionssensor Sn+1 erfolgt nach einer vorgegebenen Regel, und erfolgt beispielsweise dann, wenn der nächste Positionssensor Sn+1 näher an der Mitte der Anordnung der Antriebsmagnete 4 liegt, als der vorhergehende Positionssensor Sn.

Die Absolutposition $x_{ist}$ des Läufers 3 wird natürlich bezüglich einer bekannten, in der Regel ortsfesten, Referenzposition bestimmt. Ein Läufer 3 eines Linearmotors 1 bewegt sich beispielsweise zwischen zwei Extrempunkten, die den maximalen Bewegungsbereich des Läufers 3 festlegen. Ein Extrempunkt kann dann als Referenzposition herangezogen werden. Bei einem Langstatorlinearmotor als Linearmotor 1, bei dem oftmals eine geschlossene Bahn für die Bewegung der Läufer 3 definiert ist, wird beispielsweise ein Punkt der ortsfesten Bahn als Referenzposition definiert. Die Einbaupositionen $E_{sn}$ der Positionssensoren Sn ist dabei ebenfalls bezüglich dieser Referenzposition bekannt.

Um den zumindest einen Randbereich 8 der Anordnung von Antriebsmagnete 4 am Läufer 3 zu bestimmen, wird eine vom Magnetfeld der Antriebsmagnete 4 abhängige physikalische Größe ermittelt und ausgewertet, wie nachfolgend anhand von zwei konkreten Ausgestaltungen beschrieben wird.

Das erste Ausführungsbeispiel wird wieder, ohne Einschränkung der Allgemeinheit, anhand eines Magnetoresistiven Sensors als Positionssensor Sn beschrieben. Bekanntermaßen ist das Sensorsignal eines solchen Magnetoresistiven Sensors abhängig vom Magnetfeldwinkel $\alpha$ des auf den Sensor auftreffenden Magnetfeldes. Ausgegeben wird vom Magnetoresistiver Sensor der Sinus und Cosinus dieses Magnetfeldwinkels $\alpha$, also z.B. $U_A=U\sin(\alpha)$ und $U_B=U\cos(\alpha)$, und die Relativposition $x_i$ des gemessenen Antriebsmagnetes 4 relativ zum Positionssensor Sn ist direkt proportional zu diesem Magnetfeldwinkel $\alpha$ in der Form

$$x_i = K \operatorname{atan}2\left[\frac{U_B}{U_A}\right],$$ mit einer durch den Positionssensor Sn vorgegebenen Konstanten K. Für die Bestimmung des Randbereichs 8 wird nun die Amplitude A des Sinus und Cosinus-Spur, als vom Magnetfeld der Antriebsmagnete abhängige physikalische Größe, ausgewertet, wobei die Amplitude A definiert wird als

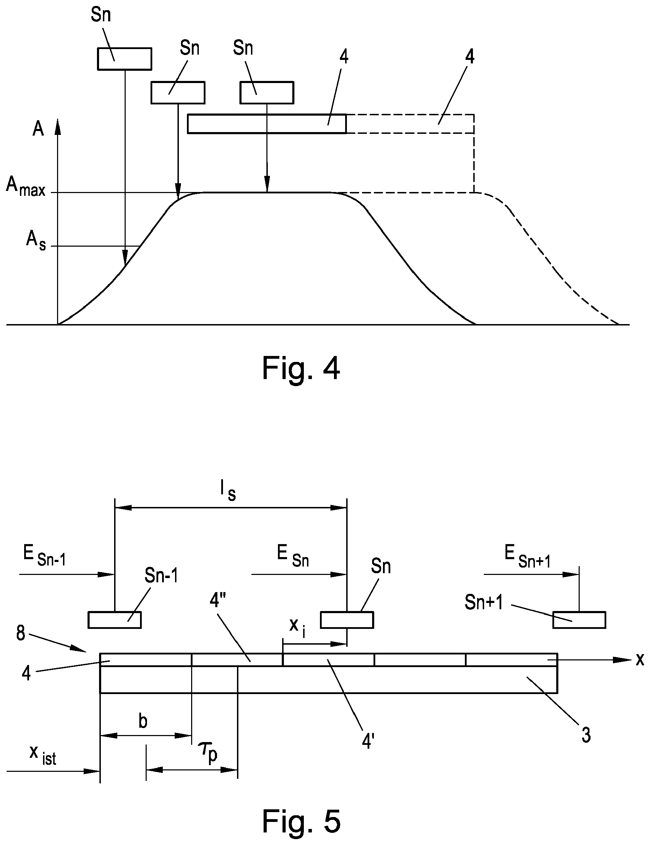

$$A = \sqrt{U_A{}^2 + U_B{}^2}.$$ Im Sättigungsbereich des Positionssensors Sn, wenn sich also der Antriebsmagnet 4 gegenüber dem Positionssensor Sn befindet, wird die Amplitude $A_{max}$ maximal sein. Ist der Antriebsmagnet 4 nicht zur Gänze gegenüber dem Positionssensor Sn so wird der Sättigungsbereich verlassen und die Amplitude A wird abfallen. Das ist in Fig.4 für einen Antriebsmagneten 4 und mit verschiedenen angedeuteten relativen Positionen zu einem Positionssensor Sn dargestellt. Bei einer Anordnung von Antriebsmagneten 4 verlängert sich der Sättigungsbereich entsprechend, wie in Fig.4 gestrichelt angedeutet. Damit kann durch Auswerten der Amplitude A der Randbereich 8 der Anordnung der Antriebsmagnete 4 erfasst werden. Es kann ein Schwellwert $A_S$ für die Amplitude A, beispielsweise 80% $A_{max}$, festgelegt werden, wobei bei Unterschreiten des Schwellwertes $A_S$ der Randbereich erkannt wird.

In Fig.5 wird beispielsweise mit dem Positionssensor Sn-1 ein Randbereich erfasst, weil die Amplitude A dieses Sensors kleiner als ein festgelegter Schwellwert $A_S$ ist. Der Positionssensor Sn-1 befindet sich damit nicht in Sättigung, wodurch die Bestimmung der Relativposition $x_i$ nicht mehr so genau ist. Zur Ermittlung einer Grobposition des Läufers 3 reicht es aber aus, da hierfür lediglich die Betragswerte benötigt werden. Damit kann aufgrund der bekannten geometrischen Zusammenhänge über die Bestimmung der Lage eines Randbereichs 8 als Grobposition derjenige Antriebsmagnet 4' ermittelt werden, dessen Magnetfeld gerade vom Positionssensor Sn erfasst wird. Nachdem Abstand $I_S$ und die Polteilung $\tau_p$ bekannt sind, ist es einfach den zugehörigen Antriebsmagnet 4' zu eruieren. Der Index N des ermittelten Antriebsmagnets 4' in der Anordnung der Antriebsmagnet 4 am Läufer 3 ist damit ebenfalls bekannt. Im Beispiel der Fig.5 wäre der 3.Antriebsmagnet 4' dem Positionssensor Sn zugeordnet, womit der Index=3 wäre. Nachdem auf diese Weise die Zuordnungen der Antriebsmagnete 4 zu den jeweiligen Positionssensoren Sn im Bereich der Anordnung der Antriebsmagnete 4 am Läufer erfolgt ist, kann nun nach einem vorgegebenen Auswahlkriterium ein Positionssensor Sn ausgewählt werden, der zur genauen Ermittlung der Absolutposition $x_{ist}$ verwendet wird. Beispielsweise wird derjenige Positionssensor Sn ausgewählt, der am nächsten zur Mitte der Anordnung der Antriebsmagnete 4 liegt. Die Mitte ist einfach durch (k · $\tau_p$)/2, mit der Anzahl k der Antriebsmagnete 4 in der Anordnung, bekannt. Aufgrund der bekannten Geometrie des Läufers 3 und der Anordnung von Antriebsmagnete 4, sowie der Kenntnis der Anordnung der Positionssensoren Sn kennt man folglich den konkreten Antriebsmagnet 4' der Anordnung der Antriebsmagnete 4, dessen Magnetfeld vom ausgewählten Positionssensor Sn gemessen wird. Der Index N des Antriebsmagnets 4', der dem Positionssensor Sn zugeordnet ist, wird als Startinkrement SI verwendet, also SI=N und im Beispiel nach Fig.5 SI=3, weil das Magnetfeld des 3.Antriebsmagnetes vom ausgewählten Positionssensor Sn erfasst wird. Mit dem ausgewählten Positionssensor Sn, der sich in Sättigung befindet, kann dann die genaue Relativposition $x_i$ bestimmt werden. Wenn der Läufer 3 nun in Bewegungsrichtung x weiterbewegt wird, wird der Positionssensor Sn irgendwann das Magnetfeld des folgenden Antriebsmagnets 4" erfassen. Es muss daher gegebenenfalls auch ein Inkrement I für die Anzahl der Sensorsignalzyklen 11 gezählt werden, solange mit dem Positionssensor Sn die Absolutposition $x_{ist}$ des Läufers ermittelt wird und dabei verschiedene Antriebsmagnete 4', 4" gemessen werden. Die Absolutposition $x_{ist}$ des Läufers 3 ergibt sich dann beispielsweise aus $x_{ist} = [(E_{Sn} - x_i)-(SI - I)\cdot\tau_p]$. Im Beispiel nach Fig.5 ist das Startinkrement SI zu Beginn 3 und das Inkrement I=1, solange der Antriebsmagnet 4' gemessen wird. Wenn der Antriebsmagnet 4" gemessen wird, wird das Inkrement I auf 2 erhöht. Das Inkrement I muss natürlich gemäß der Bewegungsrichtung x gezählt werden. Würde im Beispiel nach Fig.5 der Läufer 3 in die entgegengesetzte Richtung bewegt werden, müsste das Inkrement I beim nächsten Antriebsmagneten natürlich um Eins erniedrigt werden.

Natürlich sind, je nach konkreter Implementierung, viele andere Möglichkeiten der Berechnung der genaue Absolutposition $x_{ist}$ des Läufers 3 denkbar. Insbesondere wäre es im Beispiel nach Fig.5 auch möglich, den Randbereich im Bereich des Positionssensors Sn+1 für die Grobpositionierung zu verwenden. Das Grundprinzip bleibt dabei allerdings immer das Gleiche. Zuerst wird über die Bestimmung des zumindest einen Randbereichs 8 und der Zuordnung eines Antriebsmagnets 4' zu einem Positionssensor Sn eine Grobposition des Läufers 3 ermittelt, woraus dann anhand der bekannten Geometrie des Läufers 3, der bekannten Einbaulage $E_{Sn}$ des Positionssensors Sn und der damit bestimmten Relativposition $x_i$ die Absolutposition $x_{ist}$ bestimmt werden kann. Das erfolgt beispielsweise in der Auswerteeinheit 10.

Irgendwann muss bei Bewegung des Läufers 3 in Bewegungsrichtung x natürlich auch auf den nächsten Positionssensor Sn+1 zu Positionserfassung umgeschaltet werden, beispielsweise wenn der nächste Positionssensor Sn+1 näher zur Mitte der Anordnung der Antriebsmagnete 4 liegt als der Positionssensor Sn. Für die Weiterschaltung kann ein geeignetes Kriterium vorgegeben sein. Dabei wiederholt sich die obige Vorgehensweise. Der Index N des Antriebsmagnets 4, dessen Magnetfeld beim Umschalten auf den nächsten Positionssensor Sn+1 von diesem Positionssensor Sn+1 erfasst wird, wird als Startinkrement SI herangezogen. Das Inkrement I wird beispielsweise auf 1 gesetzt und es wird wieder die Absolutposition $x_{ist}$ wie oben berechnet.

Falls das eine Ende der Anordnung der Antriebsmagnete 4 als Randbereich 8 nicht ermittelt werden kann, beispielsweise weil kein Positionssensor Sn in diesem Bereich ein verwertbares Signal liefert, kann das andere Ende ausgewertet werden. Es können natürlich auch beide Randbereiche 8 an beiden Enden der Anordnung von Antriebsmagnete 4 für die Grobpositionierung ausgewertet werden.

Eine alternative Möglichkeit zur Bestimmung eines Randbereichs 8 nutzt die Induktivitätswerte der Antriebsspulen 5 im Stillstand des Läufers 3, also beispielsweise wiederum beim Einschalten des Linearmotors 1. Dem liegt der Gedanke zugrunde, dass die Induktivität L einer Antriebsspule 5 einen bestimmten Wert hat. Diese Induktivität L, als vom Magnetfeld der Antriebsmagnete abhängige physikalische Größe, wird aber durch das zusätzliche Magnetfeld der Antriebsmagnete 4 beeinflusst, wenn sich im Bereich einer Antriebsspule 5 ein Antriebsmagnet 4 befindet. Die Antriebsspule 5 kann als Serienschaltung eines ohmschen Widerstandes R und der Induktivität L modelliert werden. Aus der sich damit ergebenden Differentialgleichung $u = R \cdot i + L\dfrac{di}{dt}$

kann der Strom i mit $i(t) = \dfrac{u}{R}\left(1 - e^{-\frac{R}{L}t}\right)$ berechnet werden. Wird nun an die Antriebsspule 5 ein Spannungssprung $u = u_0$ angelegt und der sich ergebende Strom i als Antwort gemessen, kann beispielsweise der Stromanstieg di/dt zum Zeitpunkt $t_0 = 0$ ausgewertet werden. Aus der obigen Gleichung ergibt sich dann mit di/dt =

$\Delta i/\Delta t$ die Induktivität L mit $L = \dfrac{u_0}{\Delta i}\Delta t$. $\Delta t$ wird dabei

vorgegeben und der Strom $\Delta i$ zu diesem Zeitpunkt gemessen, bzw. aus dem gemessen Strom i als Antwort auf den Spannungssprung ermittelt. Das erfolgt beispielsweise in der Auswerteeinheit 10.

Alternativ könnte die Induktivität L einer Antriebsspule 5 auch durch Einprägen von harmonischen Signalen (Sinus, Cosinus) in eine Antriebsspule 5 (z.B. Spannung u) und durch Auswerten des Betrages und Phasenverschiebung der Antwort (z.B. Strom i) ermittelt werden.

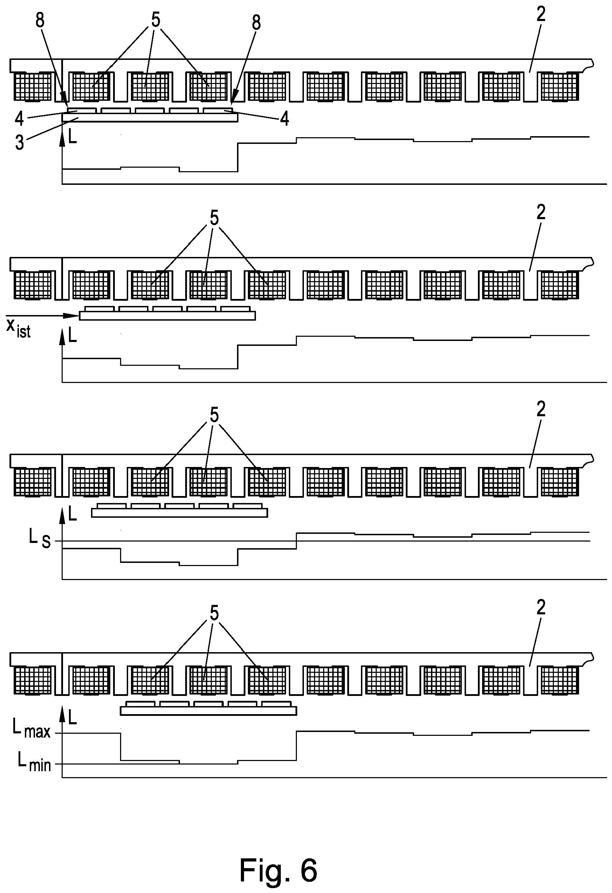

Das Ergebnis ist beispielhaft in Fig.6 dargestellt. Je nach Position $x_{ist}$ des Läufers 3 ergeben sich für die Antriebsspulen 5 unterschiedliche Induktivitäten L. Die Beeinflussung der Induktivität L einer Antriebsspule 5 durch das Magnetfeld eines Antriebsmagnetes 4 ist darin gut erkennbar. Ohne Beeinflussung, also an Stellen wo im Bereich einer Antriebsspule 5 kein Antriebsmagnet 4 zu liegen kommt, ist die Induktivität $L_{max}$ maximal. Im Gegensatz dazu ist die Induktivität $L_{min}$ minimal im Bereich der Anordnung der Antriebsmagnete 4. Im Randbereich 8 der Anordnung der Antriebsmagnete 4 wird die Induktivität L irgendwo dazwischen liegen. Der Wert der Induktivität in diesem Bereich hängt dabei von der Position des Läufers 3 relativ zur Antriebsspule 5 im Randbereich 8 ab. Dieser Zusammenhang kann beispielsweise empirisch oder durch Simulation ermittelt werden und kann als bekannt vorausgesetzt werden. Anhand des ermittelten Wertes der Induktivität L der Antriebsspule 5 kann daher wieder zumindest ein Randbereich 8 des Läufers 3 ermittelt werden, beispielsweise indem geprüft wird, ob der Induktivität L der Antriebsspule kleiner einem vorgegebenen Schwellwert $L_S$ (z.B. <80% $L_{max}$) liegt. Mit dieser Kenntnis kann die Ermittlung der genauen Absolutposition $x_{ist}$ des Läufers 3 beim Einschalten des Linearmotors 1 dann analog wie oben beschrieben durchgeführt werden.

Für dieses Verfahren sind die Induktivitäten L aller Antriebsspulen Sn zu ermitteln, oder zumindest der Antriebsspulen Sn, bei denen der Läufer 3 vermutet wird. Beispielsweise kann die letzte Position vor einem Ausschalten des Linearmotors 1 gespeichert sein. Man kann daher annehmen, dass der Läufer 3 noch ungefähr an dieser Position stehen wird und könnte nur die Induktivitäten L der Antriebsspulen Sn in dieser Umgebung ermitteln und auswerten.

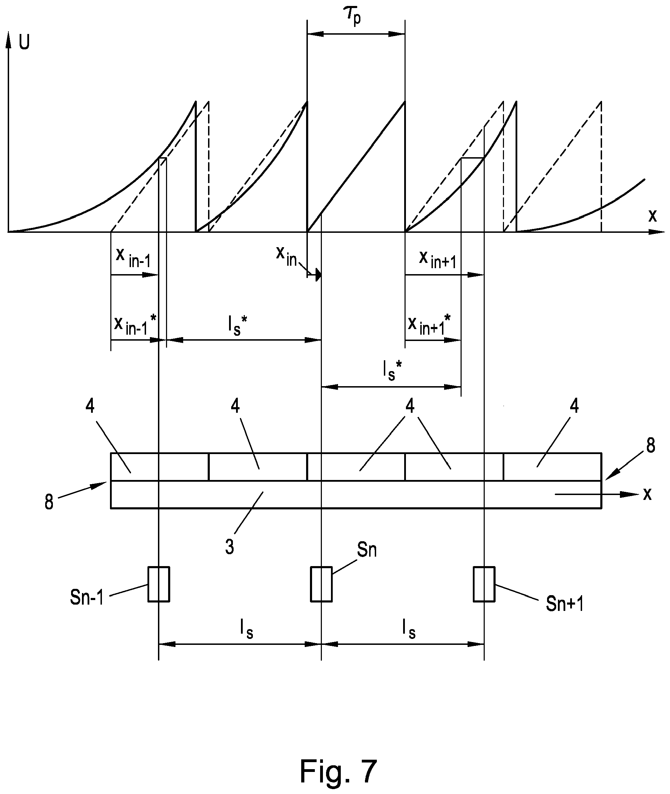

Eine weitere Möglichkeit zur Bestimmung eines Randbereichs 8 und damit der Grobposition des Läufers 3 nutzt den Umstand aus, dass aufgrund des Feldlinienverlaufs des durch die Antriebsmagnete 4 erzeugten Magnetfeldes (wie z.B. in Fig.2 dargestellt) ein mit einem Positionssensor Sn aufgenommener Sensorsignalzyklus 11 im Form eines Sägezahns nur im Bereich der Mitte des Läufers 3, also dort wo die Feldlinien annähernd normal auf die Antriebsmagnete 4 verlaufen, zu erwarten ist. Abseits der Mitte wird ein Sensorsignalzyklus 11 nichtlinear verzerrt und es kommt auch zu einer Polaufweitung, d.h. dass die Breite des Sensorsignalzyklus 11 nicht mehr mit der Polteilung $\tau_p$ eines Antriebsmagneten 4 übereinstimmt. Das ist in Fig.7 am Beispiel eines Läufers 3 mit fünf Antriebsmagneten 4 dargestellt. Ein Positionssensor Sn im Bereich der Mitte des Läufers 3 würde bei Bewegung einen nahezu idealen Sägezahn liefern, wohingegen Positionssensor Sn-1, Sn+1 abseits der Mitte ohne entsprechender Korrektur verzerrte Sägezähne (mit durchgezogenen Strichen dargestellt) liefern würden. Diese nichtlineare Verzerrung und Polaufweitung wird im Betrieb in der Regel korrigiert, sodass trotzdem eine Feinpositionsermittlung mit einem Positionssensor Sn-1, Sn+1 auch abseits der Mitte möglich ist. Diese nichtlineare Verzerrung kann aber nun auch zur Bestimmung eines Randbereichs 8 genutzt werden.

Es ist unmittelbar ersichtlich, dass im Falle eines idealen Sägezahns (strichliert in Fig.7) in den Sensorsignalzyklen 11 aus den mit den Positionssensoren Sn-1, Sn, Sn+1 gemessenen Relativpositionen $x_{in-1}$, $x_{in}$, $x_{in+1}$ und der bekannten Geometrie des Läufers 3 der Abstand zwischen zwei Positionssensoren Sn-1, Sn oder Sn, Sn+1 oder Sn-1, Sn+2 ermittelt werden kann, der dem bekannten Sensorabstand $l_s$, oder einem Vielfachen davon, entsprechen muss. Wird hingegen das nichtlinear verzerrte Signal ausgewertet, wird aus den gemessenen Relativpositionen $x_{in-1}^*$, $x_{in}$, $x_{in+1}^*$ ein Sensorabstand $l_s^*$, als vom Magnetfeld der Antriebsmagnete abhängige physikalische Größe, zwischen zwei Positionssensoren Sn-1, Sn oder Sn, Sn+1 oder Sn-1, Sn+2 ermittelt, der vom bekannten Sensorabstand $l_s$ abweichen wird. Diese Abweichung kann ausgewertet werden, um den Randbereich 8 zu bestimmen. Beispielsweise könnte im Bereich eines Positionssensor Sn-1 ein Randbereich 8 angenommen werden, wenn der Abstand $l_s^*$ (vorzugsweise als Betragswert) zum benachbarten Positionssensor Sn einen gewissen, vorgegebenen Grenzwert unterschreitet. Mit dieser Kenntnis kann die Ermittlung der genauen Absolutposition $x_{ist}$ des Läufers 3 dann analog wie oben beschrieben durchgeführt werden.

Die beschriebenen Verfahren zur Ermittlung der Randbereiche 8 und damit der Grobposition des Läufers 3 können alternativ oder auch in beliebiger Kombination eingesetzt werden. Die Kombination kann zu einer höheren Genauigkeit (durch Kontrollmöglichkeit bzw. durch Kombination der Ergebnisse beispielsweise durch Mittelwertbildung) und durch Redundanz zu einer höheren Ausfallsicherheit führen. Die beiden beschriebenen Verfahren liefern auch unterschiedliche Verlässlichkeiten. Die Methode mit dem Ermitteln der Amplituden A ist im Bereich der Positionssensoren Sn am genauesten, also wenn sich der Randbereich 8 dort befindet, wohingegen die Methode mit dem Ermitteln der Induktivitäten L im Bereich der Mittelpunkte der Antriebsspulen 5 am genauesten ist. Die Kombination kann auch diese unterschiedlichen Genauigkeiten ausgleichen bzw. kann ein Ergebnis je nach Position des Läufers 3 dem anderen Ergebnis vorgezogen werden.

Obwohl das Verfahren zur Bestimmung der Absolutposition $x_{ist}$ eines Läufers 3 am Beispiel des Einschaltens des Linearmotors 1 beschrieben wurde, ist es offensichtlich, dass das Verfahren auch in anderen Situationen angewendet werden kann. Beispielsweise könnte an einem Langstatorlinearmotor als Linearmotor 1 ein Läufer 3 auch während des Betriebs an einer bestimmten Stelle hinzugefügt werden. Die genaue Absolutposition $x_{ist}$ des hinzugefügten Läufers 3 könnte dann mit dem beschriebenen Verfahren ermittelt werden. Es sind auch Störungen denkbar, nach deren Behebung die Absolutposition $x_{ist}$ eines Läufers 3 im laufenden Betrieb neu zu bestimmen ist.

Ebenso ist es denkbar, das beschriebene Verfahren zur Bestimmung der Absolutposition $x_{ist}$ eines Läufers 3 in anderen Anwendungen als in Linearmotoren anzuwenden. Im allgemeinen Fall ist der Läufer 3 gegenüber einem ortsfesten Teil in Bewegungsrichtung x bewegbar angeordnet. Der ortsfeste Teil kann ein Stator 2 oder Langstator eines Linearmotors sein, kann aber auch ein anderer Bauteil sein. Am ortsfesten Bauteil sind dann die Positionssensoren Sn wie oben beschrieben angeordnet und die Absolutposition $x_{ist}$ des Läufers 3 bezogen auf eine ortsfeste Referenzposition kann dann wie oben beschrieben bestimmt werden.

**Patentansprüche**

1. Linearmotor mit einem Stator (2) und einem Läufer (3), der entlang des Stators (2) bewegbar ist, wobei am Läufer (3) eine Anordnung von Antriebsmagnete (4) in Form einer Mehrzahl von in Bewegungsrichtung (x) des Läufers (3) nebeneinander angeordneten Antriebsmagneten (4) mit einer Polteilung ($\tau_p$) vorgesehen ist und im Linearmotor (1) in Bewegungsrichtung (x) des Läufers (3) eine Mehrzahl von Positionssensoren (Sn-1, Sn, Sn+1) ortsfest und mit einem Sensorabstand ($l_S$) beabstandet voneinander angeordnet sind, wobei der Positionssensor (Sn-1, Sn, Sn+1) ein Magnetfeld eines Antriebsmagneten (4) der Anordnung der Antriebsmagnete (4) im Bereich des Positionssensors (Sn-1, Sn, Sn+1) erfasst, **dadurch gekennzeichnet, dass** der Sensorabstand ($l_S$) größer als die Polteilung ($\tau_p$) ist.

2. Linearmotor nach Anspruch 1, **dadurch gekennzeichnet, dass** der Stator (2) mit einem Eisenkern mit Zähnen (6) ausgeführt ist und auf jedem zweiten Zahn (6) des Stators (2) eine Antriebsspule (5) angeordnet ist.

3. Linearmotor nach Anspruch 1, **dadurch gekennzeichnet, dass** der Stator (2) mit einem Eisenkern mit Zähnen (6) ausgeführt ist und auf jedem Zahn (6) des Stators (2) eine Antriebsspule (5) angeordnet ist.

4. Linearmotor nach Anspruch 2, **dadurch gekennzeichnet, dass** auf jedem zweiten Zahn (6) des Stators (2) ein Positionssensor (Sn-1, Sn, Sn+1) angeordnet ist.

5. Linearmotor nach Anspruch 4, **dadurch gekennzeichnet, dass** die Positionssensoren (Sn-1, Sn, Sn+1) auf Zähnen (6) des Stators (2) ohne Antriebsspule (5) angeordnet sind.

6. Linearmotor nach einem der Ansprüche 1 bis 5, **dadurch gekennzeichnet, dass** die Antriebsmagnete (4) unmittelbar nebeneinander angeordnet sind.

7. Linearmotor nach einem der Ansprüche 1 bis 5, **dadurch gekennzeichnet, dass** die Antriebsmagnete (4) mit einem Abstand dazwischen nebeneinander angeordnet sind.

Fig. 1

Fig. 2

Fig. 3

EP 3 467 442 A1

Fig. 4

Fig. 5

10

Fig. 6

Fig. 7

Europäisches
Patentamt

European
Patent Office

Office européen
des brevets

# EUROPÄISCHER RECHERCHENBERICHT

Nummer der Anmeldung

EP 18 20 1733

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/037384 A1 (REINISCH MARTIN [DE]) 14. Februar 2013 (2013-02-14) * Absatz [0026] - Absatz [0035] * * Abbildungen 1-2 *<br>----- | 1,6,7 | INV.<br>G01D5/14<br>H02K41/03<br>H02P25/06<br>H02K11/215<br>H02P6/16 |
| X | DE 10 2006 032989 A1 (SIEMENS AG [DE]) 31. Januar 2008 (2008-01-31) * Absatz [0019] - Absatz [0027] * * Abbildung 1 *<br>----- | 1-5 | |
| A | US 2010/176806 A1 (O'DAY RICHARD [US] ET AL) 15. Juli 2010 (2010-07-15) * Absatz [0046] - Absatz [0047] * * Abbildungen 1-4c *<br>----- | 1-7 | |
| A | US 2011/050007 A1 (KUBO HIDEKI [JP]) 3. März 2011 (2011-03-03) * Absatz [0027] - Absatz [0051] * * Abbildungen *<br>----- | 1-7 | |

**RECHERCHIERTE SACHGEBIETE (IPC)**

G01D
H02K

Der vorliegende Recherchenbericht wurde für alle Patentansprüche erstellt

| Recherchenort | Abschlußdatum der Recherche | Prüfer |
|---|---|---|
| München | 22. Februar 2019 | Paraf, Edouard |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 1733

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-02-2019

| Im Recherchenbericht angeführtes Patentdokument | Datum der Veröffentlichung | Mitglied(er) der Patentfamilie | Datum der Veröffentlichung |
|---|---|---|---|
| US 2013037384 A1 | 14-02-2013 | CA 2797586 A1<br>DE 102010028333 A1<br>EP 2564166 A2<br>US 2013037384 A1<br>WO 2011134823 A2 | 03-11-2011<br>03-11-2011<br>06-03-2013<br>14-02-2013<br>03-11-2011 |
| DE 102006032989 A1 | 31-01-2008 | DE 102006032989 A1<br>WO 2008009556 A2 | 31-01-2008<br>24-01-2008 |
| US 2010176806 A1 | 15-07-2010 | CA 2771422 A1<br>CN 102472638 A<br>EP 2467677 A2<br>HK 1170562 A1<br>US 2010176806 A1<br>WO 2011022190 A2 | 24-02-2011<br>23-05-2012<br>27-06-2012<br>13-11-2015<br>15-07-2010<br>24-02-2011 |
| US 2011050007 A1 | 03-03-2011 | CN 102001340 A<br>JP 4941790 B2<br>JP 2011050200 A<br>KR 20110023739 A<br>TW 201116959 A<br>US 2011050007 A1 | 06-04-2011<br>30-05-2012<br>10-03-2011<br>08-03-2011<br>16-05-2011<br>03-03-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7932684 B2
- US 7994742 B2
- US 6876107 B2